# EUROPÄISCHE PATENTSCHRIFT

(11) **EP 2 038 033 B1**
(45) Veröffentlichungstag und Bekanntmachung des Hinweises auf die Patenterteilung: **11.08.2010**
(21) Anmeldenummer: 07730233.9
(22) Anmeldetag: 19.06.2007
(51) Int. Cl.: B01D 29/09

(54) **FILTERVORRICHTUNG ZUM ABSCHEIDEN VON TEILCHEN AUS EINER FLÜSSIGKEIT**
FILTERING DEVICE FOR THE PRECIPITATION OF SMALL PARTS FROM A LIQUID
DISPOSITIF DE FILTRAGE POUR EXTRAIRE DES PARTICULES D'UN LIQUIDE

(30) Priorität: 11.07.2006 DE 202006010759 U
(43) Veröffentlichungstag der Anmeldung: 25.03.2009
(73) Patentinhaber: Mann + Hummel GmbH, 71638 Ludwigsburg (DE)
(72) Erfinder: REYNDERS, Luc, B-3770 Riemst (BE)
(86) Internationale Anmeldenummer: PCT/EP2007/056045
(87) Internationale Veröffentlichungsnummer: WO 2008/006670

(56) Entgegenhaltungen:
- EP-A1- 0 024 041
- DE-A1- 3 830 780
- DE-C1- 4 404 854
- US-A- 5 601 729

## Beschreibung

### Technisches Gebiet

Die Erfindung betrifft eine Filtervorrichtung zum Abscheiden von Teilchen aus einer Flüssigkeit nach dem Oberbegriff des unabhängigen Anspruchs 1.

### Stand der Technik

Aus der US 5601729 ist eine Filtervorrichtung zum Abscheiden von Teilchen, Schmutz oder Spänen aus einer Flüssigkeit bekannt. Diese weist einen Behälter auf, mit einem Zuführeinlass, einem Schwerkraftabsetzbereich und einen stromab davon angeordneten Filtrierbereich. Im Behälter verlaufen zwei quer beabstandete, angetriebene Endlosketten, welche ein Filtervlies oder ein Filterband mitführen. Dieses Filtervlies oder Filterband deckt den Reinflüssigkeitsbereich vollständig ab. Durch die Ketten wird verhindert, dass sich das Vlies oder das Band von dem Reinflüssigkeitsbereich abhebt und eventuell Schmutz in den Reinflüssigkeitsbereich gelangen kann. Ein Nachteil solcher Ketten liegt darin, dass diese nicht bahneben gestaltet werden können, sondern die Kettenglieder als Einzelelemente eine taillierte Form aufweisen, die dazu führen kann, dass Schmutz zwischen den Kettengliedern hindurch in den Reinflüssigkeitsbereich gelangt.

Zur Vermeidung des Eindringens von Schmutz schlägt der Stand der Technik vor, im kritischen Abdichtbereich ein aufblasbares Dichtelement anzuordnen, welches eine zusätzliche seitliche Abdichtung zwischen Rohflüssigkeits- und Reinflüssigkeitsbereich bewirkt. Sofern das Filterband transportiert werden muss ist es erforderlich, diese Dichtung zu entlasten, d. h. zumindest teilweise zu evakuieren, damit das Filterband unter der Dichtung hindurch gleiten kann. Gerade beim Transport des Filterbandes kommt es jedoch zu starken Verwirbelungen im Rohflüssigkeitsbereich und damit auch zum Schmutzeintrag in den Reinflüssigkeitsbereich. Der Nachteil des Stands der Technik liegt darin, dass die seitliche Abdichtung nur zeitweise wirksam ist.

### Offenbarung der Erfindung

Der Erfindung liegt die Aufgabe zugrunde, diesen Nachteil zu vermeiden und eine Filtervorrichtung zu schaffen, die einfach aufgebaut ist und eine zuverlässige Abdichtung zwischen Rohflüssigkeitsbereich und Reinflüssigkeitsbereich bewirkt.

### Technische Lösung

Diese Aufgabe wird von dem Oberbegriff des unabhängigen Anspruchs 1, durch dessen kennzeichnende Merkmale gelöst.

Der wesentliche Vorteil der Erfindung liegt darin, dass an den Ketten bzw. an Mitnehmern, die zwischen den beiden Endlosketten angeordnet sind, flexible Metallbänder vorgesehen sind, welche sich in einem Teilbereich überlappen und welche eine, auf das Filterband gerichtete Kraft ausüben, die bewirkt, dass zwischen dem Reinflüssigkeitsbereich und dem Rohflüssigkeitsbereich eine Abdichtung gewährleistet ist. Zweckmäßigerweise sind die Metallbänder Federbänder, die sich der Formgebung der Filterkammer anpassen.

Gemäß einer Ausgestaltung der Erfindung sind im Umlenkbereich der Ketten, an den dort angeordneten Kettenrädern oder Zahnrädern, Niederhalter vorgesehen, welche eine Kraft auf die Metallbänder in Richtung des Filterbandes ausüben. Diese Niederhalter können zum Toleranzausgleich aus, in radialer Richtung längs beweglich gelagerten Stiften bestehen. Diese Stifte werden durch eine Druckfeder in Richtung der Metallbänder druckbeaufschlagt.

In einer weiteren Ausgestaltung der Erfindung sind die Metallbänder an einer Fläche der, zwischen den Ketten befindlichen Mitnehmern befestigt, zweckmäßigerweise an einer Fläche, die parallel zu dem Filterband verläuft.

Weiterbildungsgemäß weisen die Metallbänder eine Länge von etwa 600 mm bis 1000 mm und eine Breite von 50 mm bis 150 mm auf.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren, in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Die Erfindung wird nachfolgend anhand eines Ausführungsbeispiels näher erläutert. Es zeigt:
- Fig. 1: eine Filtereinrichtung in einer Schnittdarstellung,
- Fig. 2: eine Draufsicht auf ein Filterband, welches über Ketten transportiert wird und
- Fig. 3: ein Zahnrad für den Kettentransport in einer Detailansicht.

### Ausführungsform(en) der Erfindung

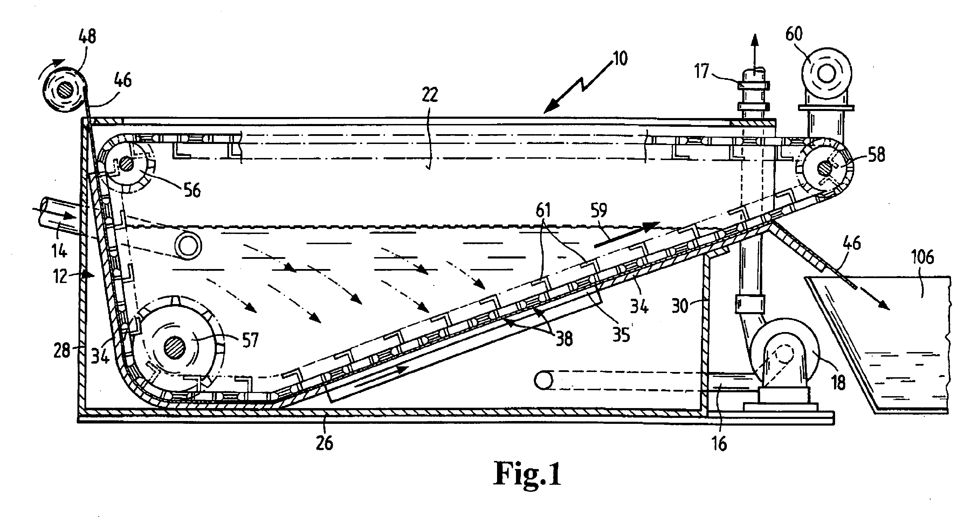

Figur 1 zeigt eine Filtereinrichtung 10 bestehend aus einem Behälter 12 mit einem Zuführeinlass 14 zum Zuführen von zu reinigender Flüssigkeit und einem Auslassrohr 16 zur Ableitung der gereinigten Flüssigkeit. Dieses Auslassrohr ist über eine Pumpe 18 mit Verteilerleitungen 17 verbunden. Der Behälter 12 weist ferner Seitenwände 22, 28, 30 und einen Boden 26 auf. Oberhalb des Bodens 26 ist eine Trennwand 34 vorgesehen, die im Bereich 35 spaltfilterförmig gestaltet ist. Innerhalb der Filtereinrichtung 10 befindet sich eine umlaufende Förderkette 38, bestehend aus einzelnen Kettengliedern, der Transport erfolgt über Zahnräder 56, 57, 58. Während die Zahnräder 56, 57 frei mitlaufen, wird das Zahnrad 58 durch einen Antriebsmotor 60 angetrieben. Zwischen der Trennwand 34 und der Förderkette 38 liegt ein Filterband 46, das von einer Rolle 48 ausgehend, durch die gesamte Filtereinrichtung verläuft und sich bis in den Behälter 106 erstreckt. Der dem Behälter über den Zuführeinlass 14 zugeführte Schmutz bzw. die in der Flüssigkeit enthaltenen Teilchen setzen sich auf dem Filterband 46 ab und werden durch eine Bewegung des Filterbandes in Richtung des Pfeils 59 aus der Flüssigkeit ausgetragen und mit dem Filterband 46 dem Behälter 106 zugeführt.

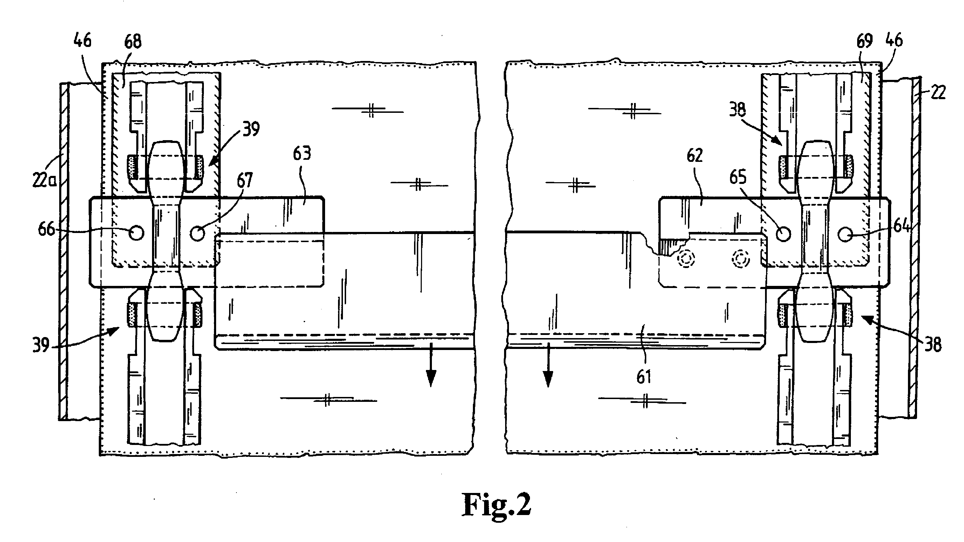

In einer Draufsicht gemäß Figur 2 ist das Filterband 46 zu erkennen. Auf diesem Filterband liegen die beiden Förderketten 38, 39. Das Filterband 46 füllt im Wesentlichen den gesamten Raum zwischen den beiden Seitenwänden 22, 22a aus. Zwischen den Förderketten 38/39 sind Mitnehmer 61 angeordnet. In dieser Darstellung ist ein Mitnehmer 61 zu sehen. Dieser hat die Aufgabe, den auf dem Filterband 46 sich ablagernden Schmutz aus dem Flüssigkeitsbereich heraus auszuführen und ein Abrutschen von Schmutz zu verhindern. Die Mitnehmer 61 sind wie in Figur 1 gezeigt, in kurzen Abständen an den Förderketten 38, 39 angeordnet und zwar durch Laschen 62, 63, die in entsprechenden Augen der einzelnen Kettenglieder gelagert sind. An den Laschen 62/63 sind Befestigungsbohrungen 64, 65, 66, 67 vorgesehen. An diesen Befestigungsbohrungen sind flexible Metallbänder 68, 69 befestigt, beispielsweise über entsprechende Schraubverbindungen. Die Metallbänder 68 + 69 liegen unmittelbar auf dem Filterband 46 auf.

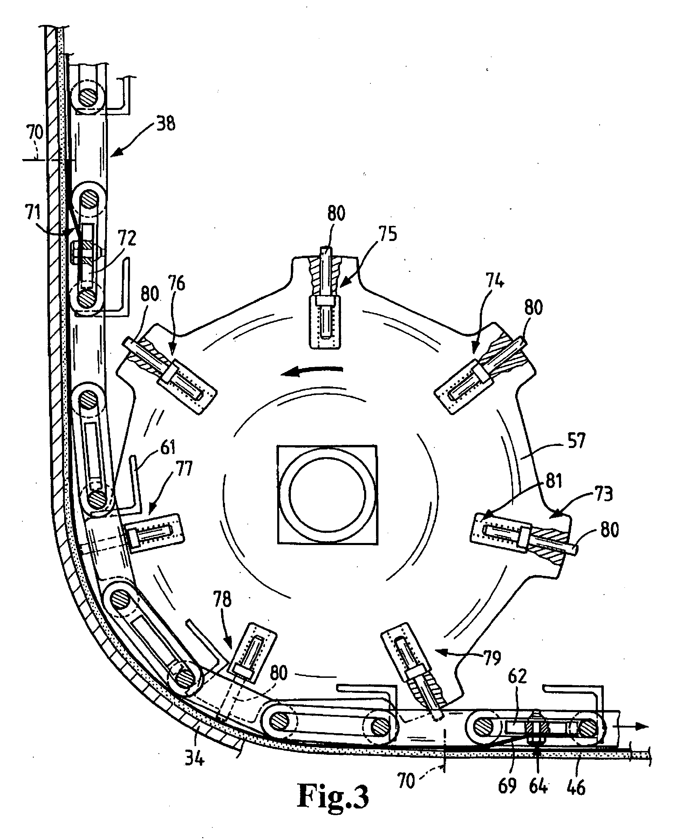

In einer Detaildarstellung gemäß Figur 3 wird die Funktion dieser Metallbänder näher erläutert.

Figur 3 zeigt das Zahnrad 57, das die Umlenkung der Endloskette 38 im unteren Bereich der Filtereinrichtung 10 bewirkt. Unmittelbar auf der Trennwand 34 liegt das Filterband 46 auf, welches von der Förderkette mitgenommen wird, d. h. bewegt wird. An der Lasche 62 ist mit der hier gezeigten Schraubverbindung 64 ein Metallband 69 befestigt. Dieses Metallband 69 erstreckt sich bis unter die Kettenglieder und unmittelbar auf das Filterband 46 und endet im Bereich 70 und zwar in einem Bereich in dem bereits das nächste Metallband 71 - ausgehend von der nächsten Lasche 72 - wiederum für eine Anlage des Filterbandes 46 an der Trennwand 34 sorgt. Dies bedeutet, dass sich die einzelnen Metallbänder hintereinander, in Laufrichtung gesehen, leicht überlappen. Dies ist auch deshalb erforderlich, weil durch den Transportweg und die unterschiedlichen Krümmungen bzw. geraden Strecken geringfügige Verschiebungen zwischen den Metallbändern auftreten.

Damit das Metallband 71 zwischen den Kettengliedern zuverlässig abdichtend an der Trennwand 34 anliegt, befinden sich auf dem Zahnrad 57 Niederhalter 73, 74, 75, 76, 77, 78, 79. Diese bestehen jeweils aus einem längs gelagerten Stift 80, der in einer entsprechenden Bohrung des Zahnrades 57 angeordnet ist. Eine Druckfeder 81 sorgt für eine radial gerichtete Kraft nach außen, die letztendlich bewirkt, dass - wie bei dem Niederhalter 78 ersichtlich - dieser das Metallband in Richtung des Radius der Trennwand sichert bzw. bewegt. Aufgrund der federwirksamen Eigenschaften ist sichergestellt, dass die Krümmung des Metallbandes sich dem Radius der Trennwand anpasst. Die Bewegung der Förderkette 38, der Mitnehmer 61 und des Filterbandes 46 wird durch die, an der Förderkette angeordneten Metallbänder nicht behindert. Ein Abheben der Metallbänder bei einem Transport des Filterbandes ist nicht erforderlich. Das Metallband sorgt insbesondere in den kritischen Umlenkbereichen des Filterbandes für eine zuverlässige Abdichtung zwischen Rohflüssigkeits- und Reinflüssigkeitsraumes.

## Patentansprüche

1. Filtervorrichtung (10) zum Abscheiden von Teilchen aus einer Flüssigkeit mit einem Behälter (12) mit einem Zuführeinlass (14), einem Schwerkraftabsetzbereich und einem stromab davon angeordneten Filtrationsbereich, wobei der Behälter teilweise zwei, quer beabstandet angetriebene Endlosketten (38) aufweist, wobei zwischen den Ketten quer verlaufende Mitnehmer (61) vorgesehen sind und wobei die Ketten und Mitnehmer eine Fördereinrichtung bilden, die von Zahnrädern (56,57,58) und einem Antriebsmotor (60) angetrieben wird und wobei der Filtrationsbereich eine Vakuumkammer aufweist, die teilweise von dem Behälter gebildet wird und unterhalb der Filtriereinrichtung angeordnet ist und zwischen dem Rohflüssigkeitsbereich und dem Reinflüssigkeitsbereich ein Filterband (46) angeordnet ist, welches von den Ketten und Mitnehmern durch den Behälter gezogen wird, **dadurch gekennzeichnet, dass** an jeweils einer Kette bzw. an jeweils einem Mitnehmer flexible Metallbänder (68,69) vorgesehen sind, die sich längs der Kette und über mehrere Kettenglieder erstrecken, wobei die Metallbänder einseitig befestigt sind und sich in einem Teilbereich überlappen, wobei diese Metallbänder eine, auf das Filterband gerichtete Kraft ausüben, die bewirkt, dass im Bereich der Richtungsumlenkung des laufenden Filterbandes eine Abdichtung zwischen dem Reinflüssigkeitsbereich und dem Rohflüssigkeitsbereich gewährleistet ist.

2. Filtervorrichtung nach Anspruch 1, **dadurch gekennzeichnet, dass** an wenigstens einem, die Ketten antreibenden Zahnrad (57) Niederhalter (73-79) vorgesehen sind, welche eine Kraft auf die Metallbänder in Richtung des Filterbandes ausüben.

3. Filtervorrichtung nach Anspruch 2, **dadurch gekennzeichnet, dass** die Niederhalter aus in radialer Richtung längs beweglich gelagerten Stiften (80) bestehen, die sich über eine Druckfeder (81) an einer Anlagefläche des Zahnrades abstützen.

4. Filtervorrichtung nach einem der vorherigen Ansprüche, **dadurch gekennzeichnet, dass** die Metallbänder an einer parallel zur Laufrichtung angeordneten Fläche der Mitnehmer befestigt sind.

5. Filtervorrichtung nach einem der vorherigen Ansprüche, **dadurch gekennzeichnet, dass** die Metallbänder eine Länge von etwa 80 mm bis 150 mm und eine Breite von 600 mm und 1000 mm aufweisen.

## Claims

1. Filtering device (10) for separating particles from a liquid with a reservoir (12) with a supply inlet (14), a gravitational deposit area and a filtration area disposed downstream thereof, the reservoir featuring partially two driven continuous chains (38) spaced at right angle, drivers (61) extending at right angle between the chains being provided, and the chains and drivers forming a conveying device which is driven by gear wheels (56, 57, 58) and a drive motor (60), and the filtering area featuring a vacuum chamber which is partially formed by the reservoir and disposed underneath the filtering device, and a filter band (46) which is drawn by the chains and the drivers through the reservoir being disposed between the unfiltered liquid area and the filtered liquid area, **characterized in that** flexible metal strips (68, 69) which extend alongside the chain and over several chain links are provided each at a chain resp. at a driver, the metal strips being attached at one side and overlapping in a subsection, these metal strips exerting a force directed towards the filter band with the effect that in the area of the direction change of the running filter band a sealing is ensured between the the filtered liquid area and the unfiltered liquid area.

2. Filtering device according to claim 1. **characterized in that** at least at one gear wheel (57) driving the chains hold-down devices (73-79) are provided which exert a force on the metal strips in the direction of the filter band.

3. Filtering device according to claim 2, **characterized in that** the hold-down devices consist of pins (80) movingly bearing-supported longitudinally in radial direction which are supported via a compression spring (81) on a contact surface of the gear wheel.

4. Filtering device according to one of the above claims, **characterized in that** the metal strips are attached at surface of the drivers disposed parallel to the running direction.

5. Filtering device according to one of the above claims, **characterized in that** the metal strips feature a length of approx. 80 mm to 150 and a width of 600 mm and 1000 mm.

## Revendications

1. Dispositif de filtration (10) pour séparer des particules d'un liquide avec un récipient (12) muni d'une ouverture d'admission (14), d'une zone de décantation par pesanteur et d'une zone de filtration placée en aval de celle-ci, le récipient présentant en partie deux chaînes sans fin (38) entraînées à distance transversale l'une de l'autre, des pièces d'entraînement (61) s'étendant transversalement entre les chaînes étant prévues et les chaînes et les pièces d'entraînement formant un dispositif de transport qui est entraîné par des roues dentées (56, 57, 58) et par un moteur d'entraînement (60), et la zone de filtration présentant une chambre à vide qui est formée partiellement par le récipient et est placée au-dessous du dispositif de filtration, et une bande filtrante (46) étant placée entre la zone de liquide brut et la zone de liquide propre, bande qui est tirée à travers le récipient par les chaînes et les pièces d'entraînement, **caractérisé en ce que** des bandes métalliques flexibles (68, 69) sont prévues à chaque fois sur une chaîne resp. sur une pièce d'entraînement, bandes qui s'étendent le long de la chaîne et sur plusieurs maillons de chaîne, les bandes métalliques étant fixées sur un côté et se chevauchant dans une sous-section, ces bandes métalliques exerçant une force dirigée sur la bande filtrante qui a pour effet qu'au niveau du changement de direction de la bande filtrante qui défile, une étanchéité est assurée entre la zone de liquide propre et la zone de liquide brut.

2. Dispositif de filtration selon la revendication 1, **caractérisé en ce que** sur au moins une roue dentée (57) entraînant les chaînes sont prévus des éléments de maintien (73, 79) qui exercent une force sur les bandes métalliques dans la direction de la bande filtrante.

3. Dispositif de filtration selon la revendication 2, **caractérisé en ce que** les éléments de maintien sont formés d'ergots (80) montés mobiles longitudinalement dans la direction radiale, ergots qui s'appuient sur une surface d'appui de la roue dentée par l'intermédiaire d'un ressort de pression (81).

4. Dispositif de filtration selon l'une des revendications précédentes, **caractérisé en ce que** les bandes métalliques sont fixées sur une surface des pièces d'entraînement disposée parallèlement à la direction de défilement.

5. Dispositif de filtration selon l'une des revendications précédentes, **caractérisé en ce que** les bandes métalliques présentent une longueur d'environ 80 mm à 150 mm et une largeur de 600 mm et 1000 mm.
